# EUROPÄISCHE PATENTANMELDUNG

(11) **EP 2 881 275 A1**
(43) Veröffentlichungstag der Anmeldung: **10.06.2015**
(21) Anmeldenummer: 14196370.2
(22) Anmeldetag: 04.12.2014
(51) Int. Cl.: B60J 5/06

(54) **Transportbehälter sowie Fahrzeug mit einem solchen Transportbehälter**

(30) Priorität: 06.12.2013 DE 102013113668
(71) Anmelder: Orten GmbH & Co. KG Fahrzeugbau und -vertrieb, 54470 Bernkastel-Kues (DE)
(72) Erfinder: Orten, Robert, 54470 Bernkastel-Kues (DE)
(74) Vertreter: Westphal, Mussgnug & Partner Patentanwälte mbB

(57) **Zusammenfassung**

Die Erfindung betrifft einen Transportbehälter 1 mit einer insgesamt rechteckig geformten Ladefläche 2, auf dessen Längsseiten 3 eine Plane unterstützende Vertikalelemente 4 die Längsseiten verschließend bzw. öffnend links verschiebblich in- oder an einer oberen Schiene 7 und einer unteren Schiene 8 geführt sind, wobei die Plane zusammenfaltbar ist.

Erfindungsgemäß verschließt eine einzige Plane in einem geschlossenen Zustand beide Längsseiten 3 des Transportbehälters über zumindest eine Frontseite 5 hinweg. In einem geöffneten Zustand öffnet die einzige Plane über zumindest eine der vollständigen Längsseiten hinweg die Ladefläche frei zugänglich machend.

## Beschreibung

Die Erfindung betrifft einen Transportbehälter, insbesondere einen Sattelauflieger oder einen auf eine Ladefläche eines Lastwagens aufsetzbaren Transportbehälter, mit einer zumindest im Wesentlichen rechteckigen Grundfläche. Auf den Längsseiten des Transportbehälters sind eine Plane von innen stützende Vertikelemente, insbesondere Paneele oder Rohre, längsverschieblich in einer oberen Schiene und in einer unteren Schiene geführt. Die Plane ist akkordeonförmig zusammenfaltbar.

Bei bekannten Transportbehältern versperrt ein nach dem Aufschieben der Seitenwand seitlich auf der Längsseite stehenbleibendes Klappladenpaket etwa 20 % der seitlichen Ladefläche. Es wird bemängelt, dass die seitliche Ladeluke nach dem Zusammenschieben zu einem Klappladenpaket keinen Zugriff auf die vollständige Ladung erlaubt. Das Klappladenpaket muss deshalb bei bekannten Transportbehältern verschoben werden, um dahinter noch vorhandenen Laderaum beispielsweise mit einem Stapler zu erreichen. Ein solcher Transportbehälter ist beispielsweise aus der DE 600 28 741 T2 bekannt.

Die Erfindung betrifft ebenso ein Fahrzeug mit einem solchen Transportbehälter.

Neuere Ansätze von Transportbehältern mit zusammenfaltbaren Planen und/oder festen Vertikalelementen, beispielsweise aus DE 20 2012 000 070 bekannt, trachten danach, eine Seitenplane aus dem Längsseitenbereich zu entfernen, beispielsweise gar hinter der Heckwand des Transportbehälters zu verbringen. Es haben sich jedoch kaum realisierbare Lösungen daraus etabliert, weil beispielsweise zulässige Bauräume nicht ohne Verkürzungen der Ladefläche einzuhalten waren. Selbst umlaufend vorgesehene Profilleisten sind gemäß Stand der Technik zur Aufnahme einer Plane je Längsseite bestimmt.

Zum freien Be- und Entladen der Transportbehälter mit zusammenfaltbaren Planen sind weitere Verbesserungen erforderlich, welche die Nachteile des Stands der Technik vermeiden.

Das der Erfindung zugrundeliegende Problem wird erfindungsgemäß gemäß den Ansprüchen 1 und 6 dadurch gelöst, dass eine einzige Plane, ggf. auch eine zusammengesetzte Plane, in einem geschlossenen Zustand beide Längsseiten des Transportbehälters über zumindest die Frontseite hinweg verschließt und in einem geöffneten Zustand über zumindest eine vollständige der Längsseiten hinweg die Ladefläche frei zugänglich machend öffnet.

Vorteilhafte Ausführungsformen sind in den Unteransprüchen angegeben.

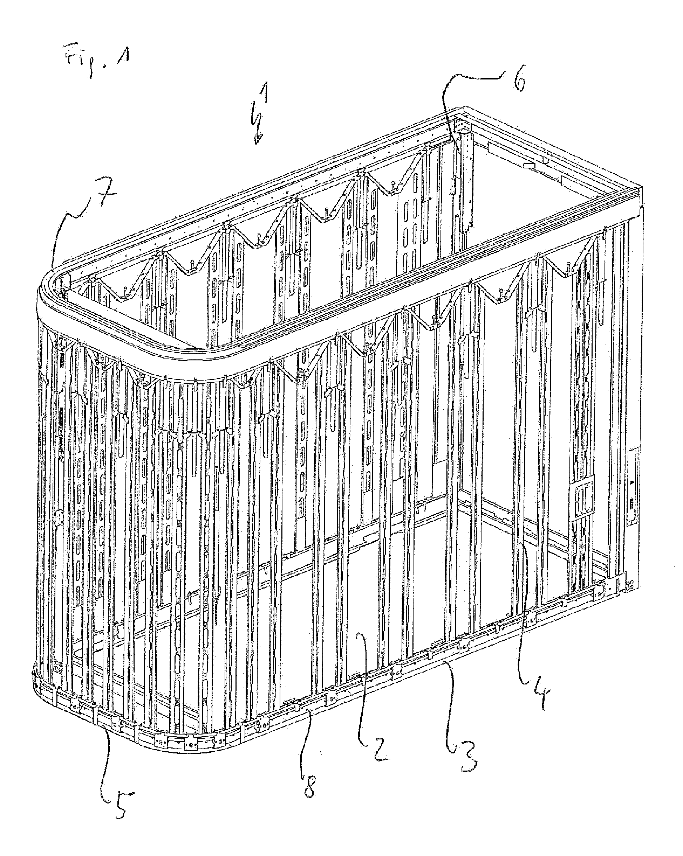

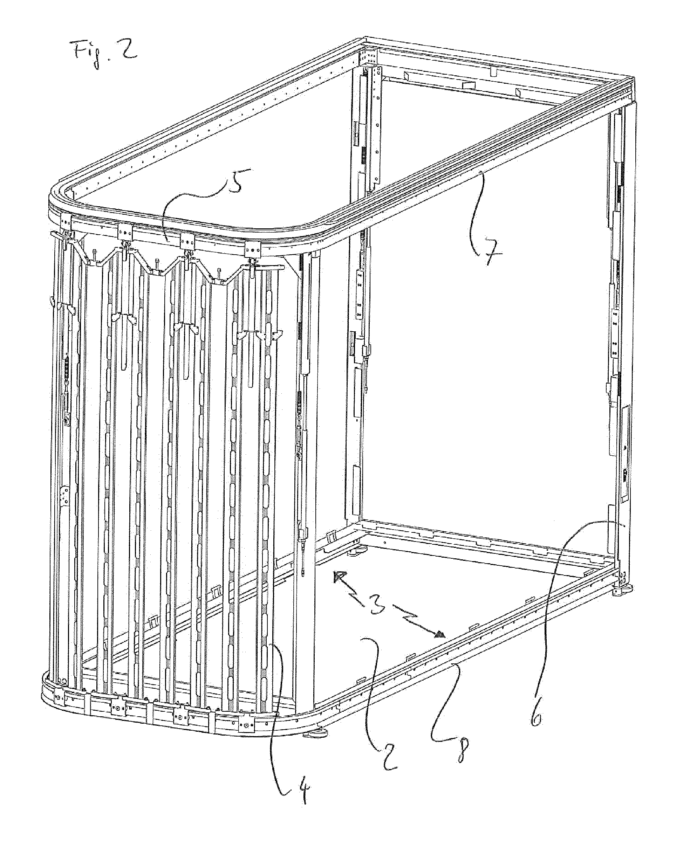

Die Erfindung wird nachfolgend an Hand eines Ausführungsbeispieles näher erläutert, vgl. Figuren 1 und 2.

Es zeigen
- Figur 1: eine perspektivische Darstellung/Ansicht auf ein Grundgerüst eines erfindungsgemäßen Transportbehälters,
- Figur 2: die Aussicht gemäß Figur 1, wobei ein Vorhang aus Vertikalelementen nur abschnittsweise dargestellt ist, um einen Blick auf vordere Stützrungen zu erlauben.

Der erfindungsgemäße Transportbehälter (1) weist gemäß dem Ausführungsbeispiel der Figuren 1 und 2 eine insgesamt rechteckig geformte Ladefläche (2) auf. Auf dessen Längsseiten (3) sind eine Plane unterstützende Vertikalelemente (4) die Längsseiten verschließend bzw. öffnend längsverschieblich in oder an einer oberen Schienen (7) und einer unteren Schiene (8) geführt. Die nicht dargestellte Plane ist zusammenfaltbar und erfindungsgemäß eine einzige Plane, welche in einem geschlossenen Zustand beide Längsseiten (3) des Transportbehälters (1) über zumindest eine Frontseite (5) hinweg verschließt und in einem geöffneten Zustand über zumindest eine vollständige Längsseite (3) hinweg die Ladefläche (2) frei zugänglich machend öffnet.

Die Vertikalelemente (4) sind in den zumindest eine kurze Seite (5) und beide Längsseiten (3) des Transportbehälters (1) umfassenden Schiene (7, 8) geführt, sodass diejenigen Vertikalelemente (4), welche im geschlossenen Zustand auf einer ersten Längsseite angeordnet sind, im geöffneten Zustand auf die zweite Längsseite verschoben sind.

Die Vertikalelemente (4) sind die Plane mitnehmend zieharmonikaartig zu einem Klappladenpaket zusammenfaltbar, welches insbesondere breiter als die Frontseite (5) des Transportbehälters (1) ist. Ist die eine Längsseite (3) aufgeschoben, schiebt sich über die Frontseite (5) hinweg auf der gegenüberliegenden Längsseite (3) in ein und derselben Schiene (7,8) das Planenpaket zusammen. Es wird bei ausreichend kleinen Faltungen kein zu großer Bauraum beispielsweise zwischen Sattelmaschine und Auflieger benötigt.

Die obere und die untere Schiene (7, 8) sind jeweils ein einziges zumindest beide Längsseiten (3) und zumindest eine der kurzen Seiten, insbesondere die Frontseite (5), des Transportbehälters (1) umfassendes Profil, welches eine einzige Plane des Transportbehälters mit kommunizierenden Längsseiten aufnimmt.

Zwei vertikal angeordnete Verschlussrungen (6) verbinden die Ladefläche (2) mit dem nicht dargestellten Dach des Transportbehälters (1). Die zusammenfaltbare, zumindest beide Längsseiten (3) und die Frontseite (5) des Transportbehälters (1) verschießende Plane ist mit ihren Enden mit der/den Verschlussrunge(n) (6) verbindbar.

## Patentansprüche

1. Transportbehälter (1), insbesondere ein eine Ladefläche eines Lastwagens zumindest teilweise verschließender Transportbehälter, mit einer insgesamt rechteckig geformten Ladefläche (2), auf dessen Längsseiten (3) eine Plane unterstützende Vertikalelemente (4) die Längsseiten verschließend bzw. öffnend längsverschieblich in oder an einer oberen Schiene (7) und einer unteren Schiene (8) geführt sind, wobei die Plane zusammenfaltbar ist,
**dadurch gekennzeichnet, dass** eine einzige Plane, ggf. auch eine zusammengesetzte Plane, in einem geschlossenen Zustand beide Längsseiten (3) des Transportbehälters über zumindest eine Frontseite (5) hinweg verschließt und in einem geöffneten Zustand über zumindest eine vollständige Längsseite (3) hinweg die Ladefläche (2) frei zugänglich machend öffnet.

2. Transportbehälter (1) nach Anspruch 1,
**dadurch gekennzeichnet, dass** die Vertikalelemente (4) in einer zumindest eine kurze Seite (5) und beide Längsseiten (3) des Transportbehälters (1) umfassenden Schiene (7, 8) geführt sind, sodass diejenigen Vertikalelemente (4), welche im geschlossenen Zustand auf einer ersten Längsseite angeordnet sind, im geöffneten Zustand auf die zweite Längsseite verschoben sind.

3. Transportbehälter (1) nach einem der Ansprüche 1 oder 2,
**dadurch gekennzeichnet, dass** die Vertikalelemente (4) die Plane mitnehmend zieharmonikaartig zu einem Klappladenpaket zusammenfaltbar sind, welches insbesondere breiter als die Frontseite (5) des Transportbehälters (1) ist.

4. Transportbehälter (1) nach einem der vorangehenden Ansprüche, **dadurch gekennzeichnet, dass** die obere und / oder die untere Schiene (7, 8) (jeweils) ein einziges zumindest beide Längsseiten (3) und zumindest eine der kurzen Seiten (5), insbesondere die Frontseite (5), des Transportbehälters (1) umfassendes Profil ist.

5. Transportbehälter (1) nach einem der vorangehenden Ansprüche, **dadurch gekennzeichnet, dass** mindestens eine und maximal zwei vertikal angeordnete Verschlussrunge(n) (6) zumindest indirekt die Ladefläche (2) mit dem Dach (9) des Transportbehälters (1) verbinden und dass die zusammenfaltbare, zumindest beide Längsseiten (3) und die Frontseite (5) des Transportbehälters (1) verschießende Plane mit ihren Enden mit der/den Verschlussrunge(n) (6) verbindbar sind.

6. Fahrzeug mit einem Transportbehälter (1) nach einem der vorangehenden Ansprüche.
